# EUROPEAN PATENT APPLICATION

(11) **EP 4 722 182 A1**
(43) Date of publication of application: **08.04.2026**
(21) Application number: 24813770.5
(22) Date of filing: 29.02.2024
(51) Int. Cl.: C04B 35/83

(54) **BRAKE DISC, PREPARATION METHOD FOR BRAKE DISC, AND VEHICLE**

(30) Priority: 30.05.2023 CN 202310627448
(71) Applicant: BYD Company Limited, Shenzhen, Guangdong 518118 (CN)
(72) Inventor: LIN, Xinping, Shenzhen, Guangdong 518118 (CN); ZHAO, Shun, Shenzhen, Guangdong 518118 (CN); XUE, Huan, Shenzhen, Guangdong 518118 (CN); JIANG, Pinyi, Shenzhen, Guangdong 518118 (CN)
(74) Representative: Taor, Simon Edward William
(86) International application number: PCT/CN2024/079183
(87) International publication number: WO 2024/244564

(57) **Abstract**

A brake disc, a preparation method for a brake disc, and a vehicle. The brake disc is a carbon-ceramic brake disc and is in the shape of a disc, and the overall graphitization degree of the brake disc ranges from 5% to 25%.

## Description

This application claims priority to Chinese Patent Application No. 202310627448.5, filed with the China National Intellectual Property Administration on May 30, 2023 and entitled "BRAKE DISC, PREPARATION METHOD FOR BRAKE DISC, AND VEHICLE", which is incorporated herein by reference in its entirety.

### TECHNICAL FIELD

This application relates to the field of brake disc technologies, and in particular, to a brake disc, a preparation method for the brake disc, and a vehicle that includes the brake disc.

### BACKGROUND

In recent years, carbon-ceramic composite materials have been widely used in the preparation of brake discs as a new generation of high-performance friction materials in the braking field due to many advantages thereof such as wear resistance, strong oxidation resistance, high temperature resistance, and light weights.

A preparation process of an existing carbon-ceramic brake disc usually includes a high-temperature treatment step, which is used to increase a porosity of a carbon-ceramic composite material, so that overall hardness and wear resistance of the carbon-ceramic composite material are improved through subsequent steps such as liquid silicon infiltration. However, the high-temperature treatment temperature may reach 2200°C, which imposes a high requirement on a production device and a process condition, and is not conducive to controlling production costs of the brake disc.

### SUMMARY

In view of the foregoing disadvantages of the conventional technology, an objective of this application is to provide a brake disc with low production costs and a preparation method for the brake disc.

According to a first aspect, this application provides a brake disc, where the brake disc is a carbon-ceramic brake disc and is in a shape of a disc, and an overall graphitization degree of the brake disc ranges from 5% to 25%.

It may be understood that, in this application, the overall graphitization degree of the brake disc is set between 5% and 25%, that is, in a preparation process, transformation of carbon atoms from an amorphous turbostratic structure to a three-dimensionally ordered graphite crystal structure is set to be relatively limited, so that a requirement for a production device and a production condition in the process is relatively low, thereby reducing production costs.

In an embodiment, the overall graphitization degree of the brake disc ranges from 10% to 20%.

In this embodiment, the graphitization degree of the brake disc is set between 10% and 20%, to reduce production costs and ensure that the brake disc has specific wear resistance and reliability.

In an embodiment, the brake disc includes silicon carbide with a mass content of 50%-65%, silicon with a mass content of 5%-10%, and carbon with a mass content of 25%-45%.

In this embodiment, on the basis that a mass of the brake disc is 100%, the mass content of the silicon carbide in the brake disc is set between 50% and 65%, the mass content of the silicon is set between 5% and 10%, and the mass content of the carbon is set between 25% and 45%, so as to ensure mechanical property and wear resistance of the brake disc.

In an embodiment, the brake disc includes, in a thickness direction thereof, two end surfaces facing away from each other, and a mass content of silicon carbide of the end surface is higher than a mass content of silicon carbide inside the brake disc.

In this embodiment, on the basis that the overall graphitization degree of the brake disc ranges from 5% to 25%, the mass content of the silicon carbide of the end surface is set to be higher than the mass content of the silicon carbide inside the brake disc, thereby ensuring wear resistance of the end surface.

In an embodiment, the mass content of the silicon carbide of the end surface ranges from 70% to 90%; and the mass content of the silicon carbide inside the brake disc ranges from 50% to 65%.

In this embodiment, because the silicon carbide has excellent wear resistance and a high-strength characteristic, the mass content of the silicon carbide of the end surface is set in the range of 70%-90%, to ensure wear resistance of the end surface, thereby ensuring a service life of the brake disc. The mass content of the silicon carbide inside the brake disc is set in the range of 50%-65%, to ensure mechanical property of the brake disc.

In an embodiment, a groove is disposed on the end surface, a depth of the groove ranges from 0.5 mm to 2 mm, and the groove is filled with silicon carbide with a mass content of at least 90%.

In this embodiment, the groove is disposed on the end surface of the brake disc, the depth of the groove is set between 0.5 mm and 2 mm, and the groove is filled with the silicon carbide with the mass content of at least 90%, so that an outer surface of the groove and the end surface are on a same horizontal plane. Based on excellent wear resistance of the silicon carbide, the mass content of the silicon carbide is set to at least 90%, so that the mass content of the silicon carbide of the end surface can be increased, and wear resistance of the end surface can be improved.

In an embodiment, a width of the groove ranges from 20 µm to 50 µm.

In an embodiment, the groove is in a spiral shape.

In an embodiment, in a radial direction of the brake disc, a distance between two adjacent turns of the groove ranges from 0.1 mm to 5 mm.

According to a second aspect, this application provides a preparation method for a brake disc, including the following steps:
performing low-temperature carbonization treatment on a first blank containing carbon components to obtain a second blank;
forming a pyrolytic carbon film on a surface of the second blank through chemical vapor deposition, to obtain a third blank;
performing liquid silicon infiltration treatment; and
processing to obtain the brake disc.

According to the preparation method for a brake disc provided in this application, impurities in the first blank are precipitated through the low-temperature carbonization treatment, that is, non-carbon components in the first blank are removed through the low-temperature carbonization treatment, to form the second blank, so that the second blank has a high carbon content, thereby ensuring that the pyrolytic carbon film is formed in subsequent chemical vapor deposition, and ensuring adhesion between the second blanks. In addition, a porosity of the second blank may be further increased based on the precipitation of the non-carbon components. The pyrolytic carbon film is formed on an outer surface of the second blank through the chemical vapor deposition, to protect carbon components of the second blank. In addition, the chemical vapor deposition can implement densification of the second blank, thereby improving mechanical property of the brake disc. The carbon components in the second blank react with silicon by using a silicon infiltration process, to form the silicon carbide, so as to ensure wear resistance of an end surface of the brake disc.

It may be understood that in this application, not only reliable wear resistance is ensured on the end surface of the brake disc, but also high-temperature treatment is not required, so that a requirement for a production device and a process condition in a preparation process can be reduced, and production costs are reduced.

In an embodiment, a groove is etched on at least a partial surface of the third blank.

In this embodiment, the groove is etched on at least the partial surface of the third blank, for example, the groove is etched on two end surfaces of the third blank. The groove provides sufficient reaction space for silicon components in a subsequent liquid silicon infiltration process and carbon components in the third blank, to increase a mass content of silicon carbide in each of the two end surfaces of the third blank. Based on excellent wear resistance of the silicon carbide, increasing the mass content of the silicon carbide of the end surface can improve wear resistance of the end surface. In addition, a small amount of the silicon components enters the third blank through the groove, and reacts to form the silicon carbide, so as to form an "I"-shaped physical pinning structure, thereby improving bonding strength between the silicon carbide and an interface of the third blank, and improving reliability of the finally prepared brake disc.

In an embodiment, a temperature of the low-temperature carbonization treatment ranges from 800°C to 1000°C.

In this embodiment, the temperature of the low-temperature carbonization treatment is set in the range of 800°C-1000°C, so as to precipitate the impurities in the first blank, thereby ensuring a relatively high mass content of the carbon components in the prepared second blank.

In an embodiment, etching of the groove on at least the partial surface of the third blank includes:
etching the third blank to separately form the groove on two end surfaces that are of the third blank in a thickness direction thereof and that face away from each other, where a depth of the groove ranges from 0.5 mm to 2 mm.

In this embodiment, the depth of the etched groove is set in the range of 0.5 mm-2 mm, so as to ensure a thickness of the silicon carbide of the end surface of the third blank. On the one hand, a thickness of the range can ensure wear resistance of the end surface of the finally prepared brake disc, so as to ensure a service life of the brake disc. On the other hand, based on a difference between a thermal expansion coefficient of the silicon carbide and a thermal expansion coefficient of the carbon, the thickness of the range may avoid a crack between silicon carbide in a surface layer and an interface of the third blank.

In an embodiment, etching of the groove on at least the partial surface of the third blank includes:
etching the third blank to separately form the groove on two end surfaces that are of the third blank in a thickness direction thereof and that face away from each other, where a width of the groove ranges from 20 µm to 50 µm.

In this embodiment, the width of the etched groove is set in the range of 20 µm-50 µm to prevent free silicon from existing in the groove, thereby ensuring that the end surface of the third blank has a high mass content of silicon carbide, and ensuring wear resistance of the end surface.

In an embodiment, etching of the groove on at least the partial surface of the third blank includes:
etching the third blank to separately form the groove in a spiral shape on two end surfaces that are of the third blank in a thickness direction thereof and that face away from each other.

In this embodiment, on the one hand, the groove is disposed in the spiral shape to ensure that wear debris generated through friction between the brake disc and a brake pad during operation of the brake disc is less likely to spill out from the end surface, thereby preventing a wear rate from being affected. On the other hand, the groove in the spiral shape can effectively alleviate thermal stress concentration inside the brake disc, and improve crack extension resistance of the brake disc.

In an embodiment, the etching the third blank to separately form the groove in a spiral shape on two end surfaces that are of the third blank in a thickness direction thereof and that face away from each other includes:
In a radial direction of the third blank, a distance between two adjacent turns of the groove ranges from 0.1 mm to 5 mm.

In this embodiment, the distance between the two adjacent turns of the groove is set in the range of 0.1 mm-5 mm, so as to ensure that the end surface of the brake disc has a high mass content of silicon carbide, and ensure bonding strength between the silicon carbide in the surface layer and the interface of the brake disc.

In an embodiment, before the performing low-temperature carbonization treatment on a first blank containing carbon components to obtain a second blank, the method further includes:
preparing the first blank by using a unit laminated needling process.

In this embodiment, a carbon fiber tire mesh and a weftless cord fabric are sequentially cyclically laid, and a needle with a barb is used to perform needle-punched weaving on the carbon fiber tire mesh and the weftless cord fabric, so that the carbon fiber tire mesh and the weftless cord fabric are integrally connected to form the first blank with specific strength and a unique structure.

In an embodiment, after the groove is etched on at least the partial surface of the third blank, the method further includes:
subjecting the third blank to high-temperature heat treatment.

In this embodiment, the third blank is subjected to the high-temperature heat treatment, to implement transformation of carbon atoms of the end surface from an amorphous turbostratic structure to a three-dimensionally ordered graphite crystal structure. Because a graphite crystal has excellent chemical stability and corrosion resistance, the high-temperature heat treatment can improve oxidation resistance and wear resistance of the end surface of the brake disc. In addition, non-carbon components in the third blank may be precipitated through the high-temperature heat treatment, so as to increase a porosity of the third blank, and increase a densification degree of the third blank through subsequent liquid silicon infiltration.

In an embodiment, a temperature of the high-temperature heat treatment ranges from 2000°C to 2200°C.

In this embodiment, the temperature of the high-temperature heat treatment is set in the range of 2000°C-2200°C, so as to ensure a graphitization degree and a porosity of the finally prepared brake disc.

According to a third aspect, this application provides a vehicle. The vehicle includes the brake disc in any one of the foregoing embodiments.

It may be understood that, because the vehicle in this application uses the brake disc in the first aspect of this application or uses the brake disc prepared by using the method in the second aspect of this application, a service life of the vehicle is ensured while production costs are low.

### BRIEF DESCRIPTION OF DRAWINGS

FIG. 1 is a schematic diagram of a structure of a brake disc 100 according to an embodiment of this application;
FIG. 2 is a schematic diagram of a structure of a blank 10 according to an embodiment of this application;
FIG. 3 is a schematic flowchart of steps of a preparation method for a brake disc 100 according to an embodiment of this application;
FIG. 4 is a schematic diagram of a partial cross-section structure of a blank before step S100 in a preparation method for a brake disc 100 according to an embodiment of this application;
FIG. 5 is a schematic diagram of a partial cross-section structure of a blank after step S200 in a preparation method for a brake disc 100 according to an embodiment of this application;
FIG. 6 is a schematic diagram of a partial cross-section structure of a blank after step S210 in a preparation method for a brake disc 100 according to an embodiment of this application; and
FIG. 7 is a schematic diagram of a partial cross-section structure of a blank after step S300 in a preparation method for a brake disc 100 according to an embodiment of this application.

Reference numerals: 100-Brake disc; 110-Friction surface; 120-Heat dissipation hole; 10-Blank; 20-End surface; 21-First end surface; 22-Second end surface; 30-Pyrolytic carbon film; 40-Groove; and 50-Silicon carbide.

### DESCRIPTION OF EMBODIMENTS

For ease of understanding of this application, the following provides a more comprehensive description of this application with reference to related accompanying drawings. Preferred implementations of this application are provided in the accompanying drawings. However, this application may be implemented in a plurality of different forms, and is not limited to the implementations described in this specification. On the contrary, an objective of providing these implementations is to enable a more thorough and comprehensive understanding of the disclosure of this application.

The following descriptions of the embodiments are shown with reference to accompanying drawings to illustrate specific embodiments that may be used to implement this application. A sequence number such as "first" or "second" of a component in this specification is merely used to distinguish between described objects, and does not have any sequence or technical meaning. In addition, unless otherwise specified, the term "connect" and "joint" in this application both include direct and indirect connection (joint). The directional terms mentioned in this application, for example, "upper", "lower", "front", "rear", "left", "right", "internal", "external", and "side", are merely directions based on the accompanying drawings. Therefore, the directional terms are used to better and more clearly describe and understand this application, instead of indicating or implying that a specified apparatus or element should have a specific orientation or be constructed and operated in a specific orientation. Therefore, this cannot be understood as a limitation on this application.

In the descriptions of this application, it should be noted that, unless otherwise specified and limited, terms "mount", "communicate", and "connect" should be understood in a broad sense, for example, may be a fixed connection, a detachable connection, or an integrated connection, may be a mechanical connection, may be a direct connection or an indirect connection by using an intermediate medium, or may be a connection between the inside of two elements. A person of ordinary skill in the art may understand specific meanings of the foregoing terms in this application based on specific situations. It should be noted that the terms such as "first" and "second" in this specification, claims, and accompanying drawings of this application are used to distinguish between different objects, and are not used to describe a specific sequence. In addition, the terms "include", "may include", "comprise", or "may comprise" used in this application indicate existence of a disclosed corresponding function, operation, element, or the like, and do not limit one or more other functions, operations, elements, or the like. In addition, the term "include" or "comprise" indicates existence of corresponding features, numbers, steps, operations, elements, components, or combinations thereof disclosed in this specification, does not rule out existence or addition of one or more other features, numbers, steps, operations, elements, components, or combinations thereof, and is intended to cover non-exclusive inclusions.

It may be understood that a brake disc in this application may be applied to transportation such as a vehicle. The brake disc in this application may be an important component in a brake system of the vehicle. The brake disc is fixed to wheels and rotates with the wheels. A working principle of the brake disc is that a brake pad in the brake system is pressed against a friction surface of the brake disc to slow or stop the rotating wheels, thereby implementing braking. It should be noted that the transportation in this application may be a battery electric vehicle, a hybrid electric vehicle, an extended-range vehicle, or the like. In some other embodiments, the transportation may alternatively be an aircraft, a high-speed train, or the like. This is not specifically limited in this application.

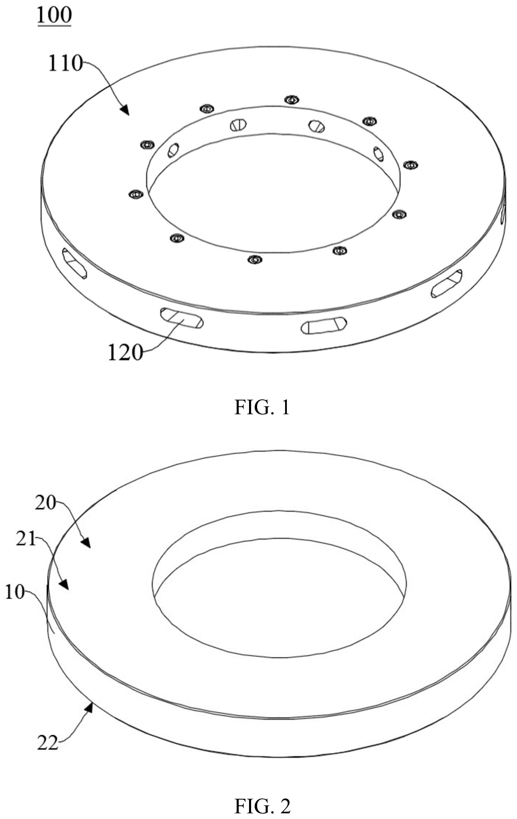

Referring to FIG. 1 and FIG. 2, FIG. 1 is a schematic diagram of a structure of a brake disc 100 according to an embodiment of this application, and FIG. 2 is a schematic diagram of a structure of a blank 10 according to an embodiment of this application.

As shown in FIG. 1, the brake disc 100 provided in this application is in a shape of a disc, and the brake disc 100 is prepared by processing the blank 10 shown in FIG. 2. Surfaces on two opposite sides of the brake disc 100 in a thickness direction thereof are disposed as friction surfaces 110. It can be learned from detection that an overall graphitization degree of the brake disc 100 in this application ranges from 5% to 25% and an overall thickness ranges from 30 mm to 40 mm. It may be understood that the overall graphitization degree of the brake disc 100 in this application ranges from 5% to 25%, that is, in a preparation process, transformation of carbon atoms from an amorphous turbostratic structure to a three-dimensionally ordered graphite crystal structure is set to be relatively limited, so that a requirement for a production device and a production condition in the process is relatively low, thereby reducing production costs.

In an embodiment, the overall graphitization degree of the brake disc 100 ranges from 10% to 20%. It may be understood that the graphitization degree is set between 10% and 20%, to reduce production costs and ensure that the brake disc 100 has specific wear resistance and reliability.

In an embodiment, it can be learned from detection that components of the brake disc 100 are silicon carbide, silicon, and carbon, where a mass content of the silicon carbide ranges from 50% to 65%, a mass content of the silicon ranges from 5% to 10%, and a mass content of the carbon ranges from 25% to 45%.

It may be understood that, because the silicon carbide has excellent wear resistance and the carbon has high strength, the carbon is used as a skeleton. In the brake disc 100, the mass content of the silicon carbide is set between 50% and 65%, the mass content of the silicon is set between 5% and 10%, and the mass content of the carbon is set between 25% and 45%, so as to ensure mechanical property and wear resistance of the brake disc 100.

In an embodiment, a mass content of silicon carbide on the friction surface 110 is higher than a mass content of silicon carbide inside the brake disc 100. It may be understood that, on the basis that a graphitization degree of the brake disc 100 is less than 25%, the mass content of the silicon carbide of the friction surface 110 is set to be higher than the mass content of the silicon carbide inside the brake disc 100, thereby ensuring wear resistance of the friction surface 110 of the brake disc 100.

In an embodiment, the mass content of the silicon carbide of the friction surface 110 of the brake disc 100 ranges from 70% to 90%; and the mass content of the silicon carbide inside the brake disc 100 ranges from 50% to 65%. It may be understood that, because the silicon carbide has excellent wear resistance and a high-strength characteristic, the mass content of the silicon carbide of the friction surface 110 of the brake disc 100 provided in this application ranges from 70% to 90%, to ensure wear resistance of the friction surface 110, thereby ensuring a service life of the brake disc 100. The mass content of the silicon carbide inside the brake disc 100 is set in the range of 50%-65%, to ensure mechanical property of the brake disc 100.

It should be noted that, as shown in FIG. 1, the brake disc 100 further includes a heat dissipation hole 120, and the heat dissipation hole 120 is configured to dissipate heat generated through friction between the brake disc 100 and the brake pad, so as to avoid affecting a braking effect and the service life of the brake disc 100. It may be understood that the brake disc 100 in this application is not limited to being applied to a brake system of a vehicle, for example, may be further applied to a brake system of transportation such as a high-speed train or an aircraft. This is not specifically limited in this application.

It should be noted in advance that a first blank, a second blank, and a third blank in this application are different forms or different states of a same blank in a process of preparing the brake disc 100 in this application. For ease of description, the blank 10 is used for expanded description this application below.

As shown in FIG. 2, this application provides a blank 10, configured to prepare the foregoing brake disc 100. The blank 10 includes two end surfaces 20. The two end surfaces 20 are respectively a first end surface 21 and a second end surface 22, and are located on two opposite sides of the blank 10. In addition, the first end surface 21 and the second end surface 22 may be used as the friction surfaces 110 of the brake disc 100, so as to implement a braking function of the brake disc 100.

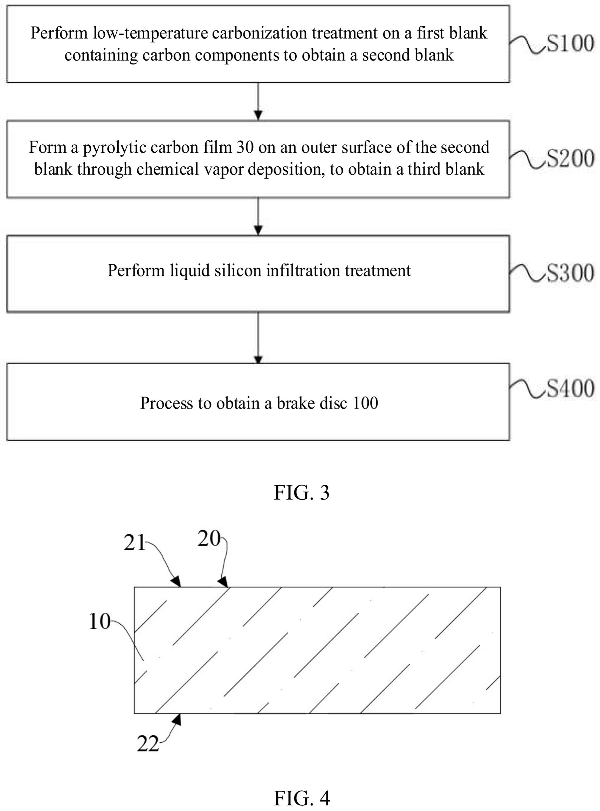

Referring to FIG. 3, FIG. 3 is a schematic flowchart of steps of a preparation method for a brake disc 100 according to an embodiment of this application.

As shown in FIG. 3, the preparation method for a brake disc 100 provided in this embodiment of this application specifically includes the following steps:
S100. Perform low-temperature carbonization treatment on a first blank containing carbon components to obtain a second blank.

FIG. 4 is a schematic diagram of a partial cross-section structure of a blank before step S100 in a preparation method for a brake disc 100 according to an embodiment of this application. Specifically, a green body of the blank 10 shown in FIG. 4 is placed in a carbonizing furnace, and a specific temperature and a specific pressure are set, so that some non-carbon components in the blank 10 are precipitated, to form a second blank with a high carbon content, that is, the carbon content of the blank 10 is increased in this process, so as to ensure that a pyrolytic carbon film 30 is formed in subsequent chemical vapor deposition, and ensure adhesion between the blanks 10. In addition, because the blank 10 is of a porous structure, a porosity of the blank 10 may be further increased based on precipitation of the non-carbon components.

S200. Form a pyrolytic carbon film 30 on an outer surface of the second blank through chemical vapor deposition, to obtain a third blank.

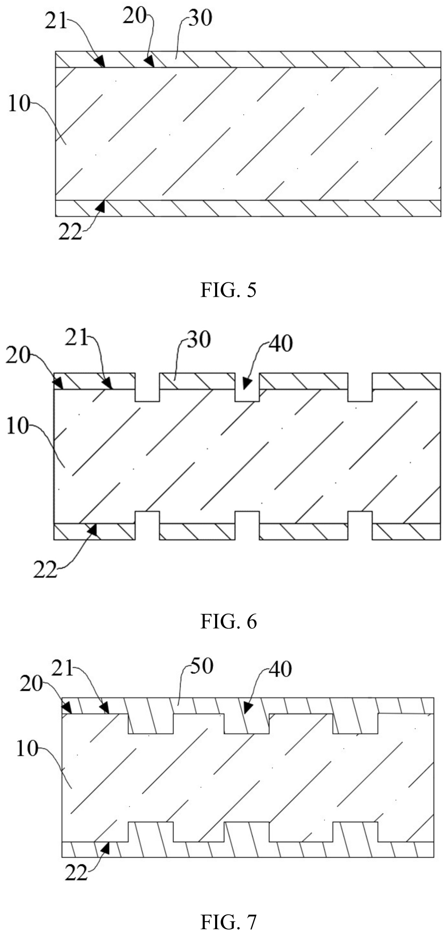

FIG. 5 is a schematic diagram of a partial cross-section structure of a blank after step S200 in a preparation method for a brake disc 100 according to an embodiment of this application. Specifically, the blank 10 obtained in step S100 is loaded into a chemical vapor deposition device for deposition, and natural gas is introduced as a deposition gas, so as to form the pyrolytic carbon film 30 on an outer surface of the blank 10 (as shown in FIG. 5). It may be understood that, because the pyrolytic carbon film 30 is covered on the outer surface of the blank 10, carbon components in the blank 10 may be prevented from being oxidized.

It should be noted that, on the basis that the blank 10 is of the porous structure, the deposition gas may also form the pyrolytic carbon film 30 on inner walls of some pores of the blank 10, to further prevent the carbon components in the blank 10 from being oxidized. In addition, the pyrolytic carbon film 30 is formed on the inner walls of the pores in the blank 10, so as to implement densification of the blank 10, thereby improving mechanical property of the brake disc 100.

In an embodiment, after step S200 "Form a pyrolytic carbon film 30 on an outer surface of the second blank through chemical vapor deposition, to obtain a third blank", the method may further include the following steps:
S210. Etch a groove 40 on at least a partial surface of the third blank.

FIG. 6 is a schematic diagram of a partial cross-section structure of a blank after step S210 in a preparation method for a brake disc 100 according to an embodiment of this application. Specifically, two end surfaces 20 that are of the blank 10 in a thickness direction thereof and that face away from each other are separately etched by using a laser etching process to respectively form grooves 40 on the two end surfaces 20 (as shown in FIG. 6). That is, a part of the pyrolytic carbon film 30 covered on the surface of the blank 10 is etched, to provide sufficient reaction space for silicon components in a subsequent liquid silicon infiltration process and carbon components in the blank 10, so that a mass content of silicon carbide 50 in each of the two end surfaces 20 of the blank 10 increases.

It may be understood that, in the embodiment shown in FIG. 6, not only the pyrolytic carbon film 30 covered on the surface of the blank 10 is etched, but also a part of a body of the blank 10 is etched. In this case, a sidewall of the groove 40 includes the pyrolytic carbon film 30 and the part of the body of the blank 10. In some other embodiments, only the pyrolytic carbon film 30 may be etched. In this case, the sidewall of the groove 40 includes only the pyrolytic carbon film 30. This is not specifically limited in this application.

In addition, because laser etching has advantages of non-contact, high efficiency, little impact on a material, and the like, using laser etching can obtain good dimensional accuracy and processing quality, effectively improve processing efficiency and quality, and effectively control costs.

S300. Perform liquid silicon infiltration treatment.

The blank 10 is subjected to the liquid silicon infiltration treatment, so that the infiltrated silicon components react with the carbon components in the pyrolytic carbon film 30 and with carbon components in the sidewall and a bottom wall of the groove 40 to form the silicon carbide 50, so as to improve wear resistance of the two end surfaces 20.

FIG. 7 is a schematic diagram of a partial cross-section structure of a blank after step S300 in a preparation method for a brake disc 100 according to an embodiment of this application. Specifically, silicon infiltration treatment is performed on the blank 10 on which the groove 40 is etched, and silicon is used as a reaction melt. At a specific temperature and within specific temperature holding duration, the infiltrated silicon components react with carbon components in the pyrolytic carbon film 30 on the surface of the blank 10 and carbon components in the blank 10 to form the silicon carbide 50 (as shown in FIG. 7). That is, the infiltrated silicon components react with the carbon components in the pyrolytic carbon film 30 and the carbon components in the sidewall and the bottom wall of the groove 40 to form the silicon carbide 50, so that silicon carbide 50 with a mass content of at least 90% is filled in the groove 40.

It may be understood that because the silicon carbide 50 has excellent wear resistance, increasing the mass content of the silicon carbide 50 in the end surface 20 may improve wear resistance of the end surface 20, thereby reducing impact of a low graphitization degree of the end surface 20 on which high-temperature treatment is not performed on friction performance. In addition, a small amount of the silicon components enters the blank 10 through the groove 40, and reacts to form the silicon carbide 50, so as to form an "I"-shaped physical pinning structure, thereby improving bonding strength between the silicon carbide 50 and an interface of the blank 10, and improving reliability of the blank 10. In this application, it is ensured that the end surface 20 of the blank 10 has reliable wear resistance. In addition, because high-temperature treatment is not required, a requirement for a production device and a production condition in a preparation process can be reduced, and production costs can be reduced.

It should be noted that, in another embodiment, the second blank may be directly subjected to liquid silicon infiltration treatment without etching the groove 40 on the surface of the third blank. Silicon is used as a reaction melt, and at a specific temperature and within specific temperature holding duration, the infiltrated silicon components react with the carbon components in the pyrolytic carbon film 30 on the surface of the blank 10 and with the carbon components in the blank 10 to form the silicon carbide 50. Similarly, the mass content of the silicon carbide 50 in the end surface 20 can be at least 70%, thereby improving wear resistance of the end surface 20.

S400. Process to obtain the brake disc 100.

Specifically, after the liquid silicon infiltration treatment, the blank 10 may be subjected to surface processing treatment. It may be understood that, in this embodiment, for example, the surface of the blank 10 may be grounded and polished, so that the surface of the blank 10 is smooth, which may avoid a braking failure caused by an uneven surface of the blank 10.

In an embodiment, before step S100 "Perform low-temperature carbonization treatment on a first blank containing carbon components to obtain a second blank", the method further includes the following steps:
S10. Prepare the first blank by using a unit laminated needling process.

Specifically, in this embodiment, a carbon fiber tire mesh and a weftless cord fabric are selected and laminated in a sequentially cyclically stacking manner of the carbon fiber tire mesh - a 0° weftless cord fabric - the carbon fiber tire mesh - a 90° weftless cord fabric - the carbon fiber tire mesh, and then needle-punched weaving is performed on the carbon fiber tire meshes and the weftless cord fabrics by using a needle with a barb in a direction perpendicular to the stacked layers, so that the carbon fiber tire meshes and the weftless cord fabrics are integrally connected, to form the blank 10 with specific strength and a unique structure.

In an embodiment, before step S10 "Prepare the first blank by using a unit needling process", the method further includes the following steps:
S20. Soak the carbon fiber tire mesh and the weftless cord fabric with a sizing agent, so that the sizing agent is coated on surfaces of the carbon fiber tire mesh and the weftless cord fabric. It may be understood that, in this embodiment, the sizing agent, the carbon fiber tire mesh, and the weftless cord fabric are used, and the sizing agent is coated on the surfaces of the carbon fiber tire mesh and the weftless cord fabric, so as to protect the carbon fiber tire mesh and the weftless cord fabric, and to ensure overall strength of the carbon fiber tire mesh and the weftless cord fabric.

In an embodiment, step S100 "Perform low-temperature carbonization treatment on a first blank containing carbon components to obtain a second blank" further includes the following manner:
S100a. A temperature of the low-temperature carbonization treatment ranges from 800°C to 1000°C.

Specifically, in this embodiment, the blank 10 obtained in S10 is placed in a carbonizing furnace, and the temperature of the low-temperature carbonization treatment is set between 800°C and 1000°C, which can ensure precipitation of some non-carbon components in the blank 10, thereby ensuring a carbon component content in the blank 10, and making the blank 10 more dense and harder. In addition, the power consumption at this temperature is relatively low, so that production costs can be reduced.

In an embodiment, step S210 "Etch a groove 40 on at least a partial surface of the third blank" further includes the following manner:
S210a. Etch the blank 10 to separately form the groove 40 on two end surfaces 20 that are of the blank 10 in a thickness direction thereof and that face away from each other, where a depth of the groove 40 ranges from 0.5 mm to 2 mm.

It may be understood that, in this embodiment, the depth of the etched groove 40 is set in the range of 0.5 mm-2 mm, so as to ensure a thickness of the silicon carbide 50 of the end surface 20 of the blank 10. On the one hand, a thickness of the range can ensure wear resistance of the end surface 20 of the blank 10, and ensure a service life of the blank 10. On the other hand, based on a difference between a thermal expansion coefficient of the silicon carbide 50 and a thermal expansion coefficient of the carbon, the thickness of the range may avoid a crack between silicon carbide 50 in a surface layer and an interface of the blank 10.

In an embodiment, step S210 "Etch a groove 40 on at least a partial surface of the third blank" further includes the following manner:
S210b. Etch the blank 10 to separately form the groove 40 on two end surfaces 20 that are of the blank 10 in a thickness direction thereof and that face away from each other, where a width of the groove 40 ranges from 20 µm to 50 µm.

It may be understood that, in this embodiment, the width of the etched groove 40 is set in the range of 20 µm-50 µm to prevent free silicon from existing in the groove 40, thereby ensuring the content of the silicon carbide 50 in the end surface 20 of the blank 10, and ensuring wear resistance of the end surface 20.

In an embodiment, step S210 "Etch a groove 40 on at least a partial surface of the third blank" further includes the following manner:
S210c. Etch the blank 10 to separately form the groove 40 in a spiral shape on two end surfaces 20 that are of the blank 10 in a thickness direction thereof and that face away from each other.

It may be understood that, in this embodiment, on the one hand, the groove 40 is disposed in the spiral shape to ensure that wear debris generated through friction between the brake disc 100 and a brake pad during operation of the brake disc 100 is less likely to spill out from the end surface 20, thereby preventing a wear rate from being affected. On the other hand, the groove 40 in the spiral shape can effectively alleviate thermal stress concentration inside the blank 10, and improve crack extension resistance of the blank 10.

In an embodiment, step S210c "Etch the blank 10 to separately form the groove 40 in a spiral shape on two end surfaces 20 that are of the blank 10 in a thickness direction thereof and that face away from each other" further includes the following manner:
S211. In a radial direction of the blank 10, a distance between two adjacent turns of the groove 40 ranges from 0.1 mm to 5 mm.

It may be understood that, in this embodiment, the distance between the two adjacent turns of the groove 40 is set in the range of 0.1 mm-5 mm, so as to ensure the content of the silicon carbide 50 in the end surface 20 of the blank 10, and ensure bonding strength between the silicon carbide 50 and the interface of the blank 10.

In an embodiment, after step S210 "Etch a groove 40 on at least a partial surface of the third blank", the method further includes the following steps:
S220. Subject the third blank to high-temperature heat treatment.

Specifically, in this embodiment, the blank 10 is subjected to the high-temperature heat treatment, to implement transformation of carbon atoms of the end surface 20 from an amorphous turbostratic structure to a three-dimensionally ordered graphite crystal structure. Because a graphite crystal has excellent chemical stability and corrosion resistance, the high-temperature heat treatment can improve oxidation resistance and wear resistance of the end surface 20 of the blank 10. In addition, the non-carbon components in the blank 10 may be precipitated through the high-temperature heat treatment, so as to increase a porosity of the blank 10, and increase a densification degree of the blank 10 through subsequent liquid silicon infiltration.

It should be noted that, in this embodiment, although a high-temperature heat treatment process is used, a quantity of steps of the high-temperature heat treatment in this embodiment is less than that in the conventional technology. Therefore, the method in this application also has a specific beneficial effect.

In an embodiment, step S220 "Subject the third blank to high-temperature heat treatment" further includes the following manner:
S220a. A temperature of the high-temperature heat treatment ranges from 2000°C to 2200°C.

It may be understood that, in this embodiment, the temperature of the high-temperature heat treatment is set in the range of 2000°C-2200°C, so as to ensure a graphitization degree and a porosity of the blank 10.

It should be noted that according to the foregoing preparation method, a structure in which the graphitization degree ranges from 10% to 20%, the mass content of the silicon carbide 50 ranges from 50% to 65%, the mass content of the silicon ranges from 5% to 10%, the mass content of the carbon ranges from 25% to 45%, the mass content of the silicon carbide 50 in the end surface 20 ranges from 70% to 90%, and the mass content of the silicon carbide 50 inside the brake disc 100 ranges from 50% to 65% may be obtained. In an embodiment, a brake disc 100 that has at least one of the following features may further be obtained: An overall thickness of the brake disc 100 ranges from 30 mm to 40 mm, an end surface 20 is provided with a groove 40, a depth of the groove 40 ranges from 0.5 mm to 2 mm, the groove 40 is filled with silicon carbide 50 with a mass content of at least 90% and a small amount of silicon, and the silicon carbide 50 and the small amount of silicon fully fill the groove 40, so that a surface of the groove 40 is located on a same plane as the end surface 20 of the brake disc 100. A width of the groove 40 ranges from 20 µm to 50 µm. The groove 40 is in a spiral shape, and a distance between two adjacent turns of the groove 40 ranges from 0.1 mm to 5 mm in a radial direction of the brake disc 100.

The following compares and describes, with reference to several embodiments that may be used in the method of this application and two typical embodiments (Comparative example 1) in the conventional technology, the beneficial effects that may be achieved by the method of this application.

Embodiment 1 provides a preparation method for a brake disc 100, and the method specifically includes the following steps:
(1) Preparation of a blank 10 by using a unit laminated needling process: A carbon fiber tire mesh and a weftless cord fabric are selected and laminated in a sequentially cyclically stacking manner of the carbon fiber tire mesh - a 0° weftless cord fabric - the carbon fiber tire mesh - a 90° weftless cord fabric - the carbon fiber tire mesh, and then needle-punched weaving is performed on the carbon fiber tire meshes and the weftless cord fabrics by using a needle with a barb in a direction perpendicular to the stacked layers, so that the carbon fiber tire meshes and the weftless cord fabrics are integrally connected, to form the blank 10 with specific strength and a unique structure.
(2) Precipitation of impurities in the blank 10 through low-temperature carbonization treatment: The low-temperature carbonization treatment is performed on the blank 10 obtained in step (1), where a temperature of the treatment is set to 1000°C, and temperature holding duration is set to 2 hours.
(3) Formation of a pyrolytic carbon film 30 on an outer surface of the blank 10 through chemical vapor deposition: The chemical vapor deposition is performed on the blank 10 obtained after the treatment in step (2), to form pyrolytic carbon.
(4) Formation of a groove 40 on two end surfaces 20 of the blank 10 separately by etching the blank 10: The groove 40 is separately etched on the two end surfaces 20 of the blank 10 obtained after the treatment in step (3), where a depth of the groove 40 is set to 2 mm, and a width is set to 50 µm.
(5) Generation of silicon carbide 50 by performing liquid silicon infiltration treatment on the blank 10 to enable infiltrated silicon components to react with carbon components in the pyrolytic carbon film 30 and with carbon components in a sidewall and a bottom wall of the groove 40: Silicon infiltration treatment is performed on the blank 10 obtained after the treatment in step (4), and silicon is used as a reaction melt to react with some carbon components in the blank 10 to generate the silicon carbide 50, so that a graphitization degree of an obtained blank 10 is 12%, a mass content of silicon carbide 50 inside the blank 10 is 50%, and a mass content of silicon carbide 50 in each of the two end surfaces 20 of the blank 10 is 70%.

Embodiment 2 provides a preparation method for a brake disc 100, and the method specifically includes the following steps:
(1) Preparation of a blank 10 by using a unit laminated needling process: A carbon fiber tire mesh and a weftless cord fabric are selected and laminated in a sequentially cyclically stacking manner of the carbon fiber tire mesh - a 0° weftless cord fabric - the carbon fiber tire mesh - a 90° weftless cord fabric - the carbon fiber tire mesh, and then needle-punched weaving is performed on the carbon fiber tire meshes and the weftless cord fabrics by using a needle with a barb in a direction perpendicular to the stacked layers, so that the carbon fiber tire meshes and the weftless cord fabrics are integrally connected, to form the blank 10 with specific strength and a unique structure.
(2) Precipitation of impurities in the blank 10 through low-temperature carbonization treatment: The low-temperature carbonization treatment is performed on the blank 10 obtained in step (1), where a temperature of the treatment is set to 1000°C, and temperature holding duration is set to 2 h.
(3) Formation of a pyrolytic carbon film 30 on an outer surface of the blank 10 through chemical vapor deposition: The chemical vapor deposition is performed on the blank 10 obtained after the treatment in step (2), to form pyrolytic carbon.
(4) Formation of a groove 40 on two end surfaces 20 of the blank 10 separately by etching the blank 10: The groove 40 is separately etched on the two end surfaces 20 of the blank 10 obtained after the treatment in step (3), where a depth of the groove 40 is set to 2 mm, and a width is set to 50 µm.
(5) Increasing of a porosity of the blank 10 by performing high-temperature heat treatment on the blank 10: The high-temperature heat treatment is performed on the blank 10 obtained in step (4), where a temperature of the treatment is set to 2200°C and temperature holding duration is set to 1 h.
(6) Generation of silicon carbide 50 by performing liquid silicon infiltration treatment on the blank 10 to enable infiltrated silicon components to react with carbon components in the pyrolytic carbon film 30 and with carbon components in a sidewall and a bottom wall of the groove 40: Silicon infiltration treatment is performed on the blank 10 obtained after the treatment in step (5), and silicon is used as a reaction melt to react with some carbon components in the blank 10 to generate the silicon carbide 50, so that a graphitization degree of an obtained blank 10 is 18%, a mass content of silicon carbide 50 inside the blank 10 is 60%, and a mass content of silicon carbide 50 in each of the two end surfaces 20 of the blank 10 is 80%.

Embodiment 3 provides a preparation method for a brake disc 100, and the method specifically includes the following steps:
(1) Preparation of a blank 10 by using a unit laminated needling process: A carbon fiber tire mesh and a weftless cord fabric are selected and laminated in a sequentially cyclically stacking manner of the carbon fiber tire mesh - a 0° weftless cord fabric - the carbon fiber tire mesh - a 90° weftless cord fabric - the carbon fiber tire mesh, and then needle-punched weaving is performed on the carbon fiber tire meshes and the weftless cord fabrics by using a needle with a barb in a direction perpendicular to the stacked layers, so that the carbon fiber tire meshes and the weftless cord fabrics are integrally connected, to form the blank 10 with specific strength and a unique structure.
(2) Precipitation of impurities in the blank 10 through low-temperature carbonization treatment: The low-temperature carbonization treatment is performed on the blank 10 obtained in step (1), where a temperature of the treatment is set to 900°C, and temperature holding duration is set to 2 h.
(3) Formation of a pyrolytic carbon film 30 on an outer surface of the blank 10 through chemical vapor deposition: The chemical vapor deposition is performed on the blank 10 obtained after the treatment in step (2), to form pyrolytic carbon.
(4) Formation of a groove 40 on two end surfaces 20 of the blank 10 separately by etching the blank 10: The groove 40 is separately etched on the two end surfaces 20 of the blank 10 obtained after the treatment in step (3), where a depth of the groove 40 is set to 2 mm, and a width is set to 50 µm.
(5) Increasing of a porosity of the blank 10 by performing high-temperature heat treatment on the blank 10: The high-temperature heat treatment is performed on the blank 10 obtained in step (4), where a temperature of the treatment is set to 2200°C and temperature holding duration is set to 1 h.
(6) Generation of silicon carbide 50 by performing liquid silicon infiltration treatment on the blank 10 to enable infiltrated silicon components to react with carbon components in the pyrolytic carbon film 30 and with carbon components in a sidewall and a bottom wall of the groove 40: Silicon infiltration treatment is performed on the blank 10 obtained after the treatment in step (5), and silicon is used as a reaction melt to react with some carbon components in the blank 10 to generate the silicon carbide 50, so that a graphitization degree of an obtained blank 10 is 16%, a mass content of silicon carbide 50 inside the blank 10 is 55%, and a mass content of silicon carbide 50 in each of the two end surfaces 20 of the blank 10 is 75%.

Embodiment 4 provides a preparation method for a brake disc, and the method specifically includes the following steps:
(1) Preparation of a blank by using a unit laminated needling process: A carbon fiber tire mesh and a weftless cord fabric are selected and laminated in a sequentially cyclically stacking manner of the carbon fiber tire mesh - a 0° weftless cord fabric - the carbon fiber tire mesh - a 90° weftless cord fabric - the carbon fiber tire mesh, and then needle-punched weaving is performed on the carbon fiber tire meshes and the weftless cord fabrics by using a needle with a barb in a direction perpendicular to the stacked layers, so that the carbon fiber tire meshes and the weftless cord fabrics are integrally connected, to form the blank with specific strength and a unique structure.
(2) Precipitation of impurities in the blank through low-temperature carbonization treatment: The low-temperature carbonization treatment is performed on the blank obtained in step (1), where a temperature of the treatment is set to 1000°C, and temperature holding duration is set to 2 h.
(3) Formation of a pyrolytic carbon film on an outer surface of the blank through chemical vapor deposition: The chemical vapor deposition is performed on the blank obtained after the treatment in step (2), to form pyrolytic carbon.
(4) High-temperature heat treatment is performed on the blank obtained in step (3), where a temperature of the treatment is set to 2200°C and temperature holding duration is set to 1 h.
(5) Silicon infiltration treatment is performed on the blank obtained after the treatment in step (4), and silicon is used as a reaction melt to react with some carbon components in the blank to generate silicon carbide, so that a graphitization degree of an obtained blank is 12%, a mass content of silicon carbide inside the blank is 50%, and a mass content of silicon carbide in each of the two end surfaces of the blank is 63%.

Embodiment 5 provides a preparation method for a brake disc, and the method specifically includes the following steps:
(1) Preparation of a blank by using a unit laminated needling process: A carbon fiber tire mesh and a weftless cord fabric are selected and laminated in a sequentially cyclically stacking manner of the carbon fiber tire mesh - a 0° weftless cord fabric - the carbon fiber tire mesh - a 90° weftless cord fabric - the carbon fiber tire mesh, and then needle-punched weaving is performed on the carbon fiber tire meshes and the weftless cord fabrics by using a needle with a barb in a direction perpendicular to the stacked layers, so that the carbon fiber tire meshes and the weftless cord fabrics are integrally connected, to form the blank with specific strength and a unique structure.
(2) Precipitation of impurities in the blank through low-temperature carbonization treatment: The low-temperature carbonization treatment is performed on the blank obtained in step (1), where a temperature of the treatment is set to 750°C, and temperature holding duration is set to 2 h.
(3) Formation of a pyrolytic carbon film on an outer surface of the blank through chemical vapor deposition: The chemical vapor deposition is performed on the blank obtained after the treatment in step (2), to form pyrolytic carbon.
(4) Silicon infiltration treatment is performed on the blank obtained after the treatment in step (3), and silicon is used as a reaction melt to react with some carbon components in the blank to generate silicon carbide, so that a graphitization degree of an obtained blank is 10%, a mass content of silicon carbide inside the blank is 50%, and a mass content of silicon carbide in each of the two end surfaces of the blank is 60%.

Comparative example 1 provides a preparation method for a conventional brake disc, and the method specifically includes the following steps:
(1) Preparation of a blank by using a unit laminated needling process.
(2) High-temperature treatment: High-temperature treatment is performed on the blank obtained in step (1), where a temperature of the treatment is set to 2200°C and temperature holding duration is set to 2 h.
(3) Chemical vapor deposition: A pyrolytic carbon film is deposited on a surface of the blank.
(4) Secondary high-temperature treatment: The high-temperature treatment is performed on the blank obtained after the treatment in step (3) again, where the temperature of the treatment is set to 2200°C and the temperature holding duration is set to 3 h.
(5) Liquid silicon infiltration: Silicon infiltration treatment is performed on the blank obtained after the treatment in step (4), and silicon is used as a reaction melt to react with some carbon components in the blank to generate silicon carbide, so that a graphitization degree of an obtained blank is 40%, a mass content of silicon carbide inside the blank is 66%, and a mass content of silicon carbide in each of the two end surfaces of the blank is 68%.

For each of the brake discs prepared in the foregoing several embodiments and Comparative example 1, a porosity before silicon infiltration, the graphitization degree after silicon infiltration, density after silicon infiltration, a porosity after silicon infiltration, the mass content of the silicon carbide inside the blank, the mass content of the silicon carbide in the end surface of the blank, and a wear amount are tested and counted. Results are shown in the following Table 1.

**Table 1:**

| Experiment | Porosity before silicon infiltration | Graphitization degree after silicon infiltration | Density after silicon infiltration | Porosity after silicon infiltration | Mass content of silicon carbide inside a blank | Mass content of silicon carbide on an end surface of a blank | Wear amount |
|---|---|---|---|---|---|---|---|
| Embodiment 1 | 30% | 12% | 2.31 | 2% | 50% | 70% | 0.5 mm |
| Embodiment 2 | 34% | 18% | 2.44 | 3% | 60% | 80% | 0.4 mm |
| Embodiment 3 | 33% | 16% | 2.36 | 3% | 55% | 75% | 0.47 mm |
| Embodiment 4 | 30% | 12% | 2.30 | 3% | 50% | 54% | 0.65 mm |
| Embodiment 5 | 28% | 10% | 2.28 | 3.5% | 50% | 53% | 0.75 mm |
| Comparative example 1 | 40% | 40% | 2.48 | 1% | 66% | 68% | 0.55 mm |

It can be learned from the experimental results of Embodiments 1-4 and Comparative example 1 in Table 1 that the brake discs provided in this application each have a low graphitization degree and have lower production costs than those of the brake disc in the conventional technology, thereby ensuring specific wear resistance of the brake disc.

It can be learned from Embodiments 1-3 and Embodiment 4 in Table 1 that the mass content of the silicon carbide in the end surface of each of the brake discs is controlled to be higher than that of the silicon carbide inside the brake disc, so as to improve wear resistance of the brake disc.

It can be learned from the experimental results of Embodiment 4 and Embodiment 1 in Table 1 that when the graphitization degrees are the same, that is, the production costs are the same, the groove is disposed on the end surface of the brake disc, so as to improve wear resistance of the brake disc, and improve reliability of the brake disc.

It can be learned from the experimental results of Embodiment 4, Experiment 5, and Comparative example 1 in Table 1 that the temperature of the low-temperature carbonization treatment is properly lowered, to ensure that the production costs of the brake disc are reduced while specific wear resistance of the brake disc is ensured.

In conclusion, compared with the brake disc in the conventional technology, the brake disc prepared in this application by using, in a preparation process, a solution in which the low-temperature carbonization treatment is used in combination with etching of the groove on the surface of the blank has excellent mechanical property, good wear resistance, and relatively low production costs.

It should be understood that the terms such as "first" and "second" are used only for descriptive purposes, and cannot be understood as implicitly indicating a quantity of indicated technical features. Therefore, features defined with "first" and "second" may explicitly or implicitly include one or more features.

In the description of this specification, the description with reference to the terms such as "some implementations", "an example implementation", and "an example" means that the specific features, structures, materials, or characteristics described with reference to the implementation or example are included in at least one implementation of this application. In this specification, illustrative expressions of the foregoing terms do not necessarily refer to a same implementation or example. In addition, the described specific features, structures, materials, or characteristics may be combined in an appropriate manner in any one or more implementations.

It should be understood that the application of this application is not limited to the foregoing examples. A person of ordinary skill in the art may make improvements or changes according to the foregoing description, and all the improvements and changes shall fall within the protection scope of the claims appended to this application. A person of ordinary skill in the art may understand that all or some of procedures for implementing the foregoing embodiments and equivalent modifications made according to the claims of this application shall fall within the scope of this application.

## Claims

1. A brake disc (100), wherein the brake disc (100) is a carbon-ceramic brake disc and is in a shape of a disc, and an overall graphitization degree of the brake disc (100) ranges from 5% to 25%.

2. The brake disc (100) according to claim 1, wherein the overall graphitization degree of the brake disc (100) ranges from 10% to 20%.

3. The brake disc (100) according to claim 1 or 2, wherein the brake disc (100) comprises silicon carbide with a mass content of 50%-65%, silicon with a mass content of 5%-10%, and carbon with a mass content of 25%-45%.

4. The brake disc (100) according to claim 1 or 2, wherein the brake disc (100) comprises, in a thickness direction thereof, two end surfaces (20) facing away from each other, and a mass content of silicon carbide of the end surface (20) is higher than a mass content of silicon carbide inside the brake disc (100).

5. The brake disc (100) according to claim 4, wherein the mass content of the silicon carbide of the end surface (20) ranges from 70% to 90%; and the mass content of the silicon carbide inside the brake disc (100) ranges from 50% to 65%.

6. The brake disc (100) according to claim 4 or 5, wherein a groove (40) is disposed on the end surface (20), a depth of the groove (40) ranges from 0.5 mm to 2 mm, and the groove (40) is filled with silicon carbide with a mass content of at least 90%.

7. The brake disc (100) according to claim 6, wherein a width of the groove (40) ranges from 20 µm to 50 µm.

8. The brake disc (100) according to claim 6, wherein the groove (40) is in a spiral shape.

9. The brake disc (100) according to claim 8, wherein in a radial direction of the brake disc, a distance between two adjacent turns of the groove (40) ranges from 0.1 mm to 5 mm.

10. A preparation method for a brake disc (100), used for preparing the brake disc (100) according to any one of claims 1-9, and comprising the following steps:
performing low-temperature carbonization treatment on a first blank containing carbon components to obtain a second blank;
forming a pyrolytic carbon film (30) on a surface of the second blank through chemical vapor deposition, to obtain a third blank;
performing liquid silicon infiltration treatment; and
processing to obtain the brake disc (100).

11. The preparation method for a brake disc (100) according to claim 10, wherein a groove (40) is etched on at least a partial surface of the third blank.

12. The preparation method for a brake disc (100) according to claim 10 or 11, wherein a temperature of the low-temperature carbonization treatment ranges from 800°C to 1000°C.

13. The preparation method for a brake disc (100) according to claim 11, wherein a depth of the groove (40) ranges from 0.5 mm to 2 mm.

14. The preparation method for a brake disc (100) according to claim 11, wherein a width of the groove (40) ranges from 20 µm to 50 µm.

15. The preparation method for a brake disc (100) according to claim 11, wherein the groove (40) is in a spiral shape.

16. The preparation method for a brake disc (100) according to claim 15, wherein in a radial direction of the third blank, a distance between two adjacent turns of the groove (40) ranges from 0.1 mm to 5 mm.

17. The preparation method for a brake disc (100) according to any one of claims 10-16, before the performing low-temperature carbonization treatment on a first blank containing carbon components to obtain a second blank, further comprising:
preparing the first blank by using a unit laminated needling process.

18. The preparation method for a brake disc (100) according to any one of claims 11-16, after the groove (40) is etched on at least the partial surface of the third blank, further comprising: subjecting the third blank to high-temperature heat treatment.

19. The preparation method for a brake disc (100) according to claim 18, wherein a temperature of the high-temperature heat treatment ranges from 2000°C to 2200°C.

20. A vehicle, comprising the brake disc (100) according to any one of claims 1-9.
